# EUROPÄISCHE PATENTSCHRIFT

(11) **EP 0 875 669 B1**
(45) Veröffentlichungstag und Bekanntmachung des Hinweises auf die Patenterteilung: **13.08.2003**
(21) Anmeldenummer: 98105489.3
(22) Anmeldetag: 26.03.1998
(51) Int. Cl.: F01N 7/18, F16L 27/10

(54) **Flexibles Leitungselement**
Flexible pipe element
Elément de conduite flexible

(30) Priorität: 02.05.1997 DE 29707908 U
(43) Veröffentlichungstag der Anmeldung: 04.11.1998
(73) Patentinhaber: Witzenmann GmbH, 75175 Pforzheim (DE)
(72) Erfinder: Elsässer, Fabian, 75334 Straubenhardt (DE); Krawietz, Tom, 75217 Birkenfeld (DE)
(74) Vertreter: Blumenröhr, Dietrich

(56) Entgegenhaltungen:
- EP-A- 0 493 680
- US-A- 4 746 148

## Beschreibung

Die Erfindung betrifft ein flexibles Leitungselement, insbesondere für Abgasleitungen von Verbrennungsmotoren bei Kraftfahrzeugen nach dem Oberbegriff des Anspruches 1.

Bei einem derartigen durch die EP-A-0 493 680 bekannten Leitungselement ist zur Erhöhung der Schwingungsdämpfung das zwischen Balg und Metallschlauch angeordnete Metalldrahtelement als Geflechtsschlauch ausgebildet, der mit wenigstens einem seiner Enden innerhalb des zugeordneten Balganschlußendes festgelegt ist. Es hat sich jedoch gezeigt, daß hier die Dämpfungswirkung nur gering ist, weil der Geflechtsschlauch - um seine mit Längenänderungen einhergehenden Durchmesseränderungen zuzulassen - lose in dem Zwischenraum zwischen Balg und Metallschlauch liegt und nur entweder am Metallschlauch oder am Balg in Anlage sein kann, um die dämpfende Wirkung auszuüben. Die Dämpfungswirkung ist also Zufällen aus dem jeweiligen Betriebszustand des Leitungselementes unterworfen. Außerdem ist für den Geflechtsschlauch die Festlegung wenigstens eines seiner Enden erforderlich. Ferner bedingt der Geflechtsschlauch durch seine Gestaltung einen vergleichsweise hohen Materialaufwand. Schließlich aber kann der Geflechtsschlauch insbesondere keine radiale Festlegung des Metallschlauches innerhalb des Balges bewirken, so daß es unter ungünstigen Betriebsbedingungen zum gegenseitigen Schlagen von Metallschlauch und Balg kommen kann. Um einer solchen Wirkung zu begegnen, sind im bekannten Falle zusätzliche Mittel beispielsweise in Form eines Metalldrahtgestrickes zwischen Metallschlauch und Balg gepackt. Auch diese müssen jedoch die mit Durchmesseränderungen des Geflechtsschlauches einhergehenden Radialbewegung durch Belassung eines entsprechenden Radialspieles zulassen und sie erhöhen die Gestehungskosten des Leitungselementes und erschweren seine Montage.

Aufgabe der Erfindung ist es daher, ein Leitungselement der eingangs genannten Art dahingehend zu verbessern, daß mit grundsätzlich nur einem Element aus Metalldraht zur Erzeugung des Schwingungsbedämpfung des Leitungselementes der Zwischenraum zwischen Balg und Metallschlauch wenigstens lokal spielfrei ausgefüllt ist, wobei der für dieses Element erforderliche Einsatz an Drahtmaterial trotzdem erheblich gegenüber dem Bekannten herabgesetzt sein soll.

Diese Aufgabe ist erfindungsgemäß durch die kennzeichnenden Merkamle des Anspruches 1 gelöst.

Diese Maßnahmen haben die Wirkung, daß zwischen Balg und Metallschlauch ein Schlagen nicht mehr auftreten kann, da nunmehr der Zwischenraum zwischen diesen beiden Teilen durch das Element spielfrei, jedoch in federnd nachgiebiger Weise ausgefüllt ist. In der genannten Weise befindet sich jedoch das Element auch ständig in Anlage sowohl am Balg als auch am Metallschlauch, so daß seine schwingungsdämpfende Wirkung dauerhaft,gegeben ist. Andererseits erlaubt die Verwendung eines Gestrickes einen vergleichsweise ganz bedeutend geringeren Einsatz an Metalldraht und hat zudem durch die Struktur des Gestrickes zur Folge, daß die Berührung zwischen Balg und Metallschlauch einerseits sowie dem Element andererseits auf kleine Einzelstellen reduziert ist, die insgesamt nur eine geringe Berührungsfläche und damit einen entsprechend niedrigen Verschleiß zwischen den Bauteilen ergibt. Schließlich bedeutet trotzdem das

Gestrickeelement keine Beeinträchtigung der Beweglichkeit von Balg und Metallschlauch und es ist die Eigenart eines Gestrickes, daß es sich ohne Änderung seiner radialen Abmessungen axial in der Länge verändern läßt, woraus sich eine erheblich Erhöhung der inneren Dämpfung des Elementes aus Metalldraht ergibt.

Was die Anordnung des Gestrickes betrifft, so bedeutet auch dies keine Probleme, denn das Gestricke kann als entsprechendes schlauchförmiges Element auf den Metallschlauch aufgeschoben werden. Es besteht jedoch auch die Möglichkeit, das Element unmittelbar auf den Metallschlauch aufzustricken, so daß es sogleich mit dem Metallschlauch für die weitere Montage zur Verfügung steht.

Dabei kann vorgesehen sein, daß das Element radial vorgespannt bzw. unter radialer Vorspannung gegenüber dem Balg und/oder dem Metallschlauch in den Zwischenraum eingesetzt ist. Dies ergibt eine zusätzliche gegenseitige Abstützung von Balg und Metallschlauch und kann außerdem je nach gewählter Größe der Vorspannung der Einstellung einer gewünschten Dämpfungswirkung dienen.

Grundsätzlich ist im übrigen die Dämpfungswirkung und die federnde Stützeigenschaft des Gestrickeelementes grundsätzlich durch die Art des Gestrickes beeinflußbar, indem dieses engmaschiger bzw. weitmaschiger ausgebildet wird.

Zur Ausbildung des Elementes bestehen zahlreiche verschiedene Möglichkeiten, von denen nachfolgend nur einige wesentliche Gestaltungen aufgezeigt seien. So kann das Element aus wenigstens einem sich über zumindest einen Teil der axialen Länge des Zwischenraumes erstreckenden Gestrickeschlauch bzw. Gestrickering bestehen. Je nach Anforderungen des Einzelfalles besteht also die Möglichkeit, den Zwischenraum in seiner gesamten axialen Länge mit einem Gestrickeschlauch auszufüllen. Es kann jedoch auch vorgesehen werden, mehrere kürzere Schlauchstücke in axialem Abstand nebeneinander vorzusehen, was dann bei entsprechender Kürze dieser Schlauchstücke im Ergebnis zur Verwendung von einem oder mehreren Gestrickeringen fuhrt.

Eine andere Möglichkeit kann darin bestehen, daß das Element aus wenigstens einem schraubengangförmig innerhalb des Zwischenraumes gegebenenfalls unter axialer Beabstandung benachbarter Windungen verlaufenden Gestrickeband besteht.

Je nach Ausbildung des Elementes kann vorgesehen sein, daß dieses mit wenigstens einem seiner Enden zwischen zugeordnetem Balganschlußende und Endstück des Metallschlauches festgelegt ist Eine andere Möglichkeit der axialen Fixierung des Elementes ergibt sich daraus, daß das Element sich mit der Innenprofilierung des Balges und/oder der Außenprofilierung des Metallschlauches in formschlüssigem Eingriff befindet, wozu vorgesehen sein kann, daß der Balg und/oder der Metallschlauch auf der dem Element zugewandten Seite eine zusätzliche Oberflächenprofilierung zum formschlüssigen Eingriff mit dem Element aufweist, wobei das Element auch mit der Oberflächenprofilierung verpreßt sein kann.

Zur weiteren für den jeweiligen Umstand des Einzelfalles zweckmäßigen Anpassung der Dämpfungs- und Federwirkung des Gestrickes kann vorgesehen sein, daß das das Element bildende Gestricke zumindest teilweise verdichtet bzw. gestaucht oder zusammengepreßt ist Hier wird also ausgehend von einem Ursprungsgestricke dieses vor der Montage radial und/oder axial verdichtet bzw. zusammengepreßt, um gegebenenfalls eine massive radiale Stütz- und Federwirkung zu ergeben und außerdem sowohl eine erhöhte innere Reibung des Elementes als auch dessen erhöhten Reibungswiderstand gegenüber Balg und Metallschlauch. Dabei kann für einen Gestrickeschlauch an diesem eine derartige Verdichtung auch nur lokal beispielsweise an einem oder mehreren Längenabschnitten vorgesehen werden

Eine weitere Möglichkeit der feinfühligen Steuerung der Wirkung des Gestrickeelementes kann dadurch erreicht werden, daß dieses und/oder das das Element bildende Gestricke eine Querschnittsprofilierung aufweist. Eine solche Querschnittsprofilierung kann sich durch einen in Radialrichtung gesehen wellenförmigen Verlauf des Gestrikkes im Zwischenraum zwischen Balg und Metallschlauch ausdrücken, so daß das Element nur an axial beabstandeten Stellen abwechselnd mit Balg und Metallschlauch in Berührung kommt. Die Querschnittsprofilierung kann aber auch durch eine Wellengeometrie des das Gestricke bildenden Drahtes gegeben sein, was zu einer gewissen Verzahnungswirkung benachbarter Gestrickemaschen führt und sich im übrigen auf die Federwirkung des Gestrickeelementes entsprechend auswirkt.

Was das Gestricke selbst betrifft, so kann der gestrickebildende Metalldraht auch mehrfädig ausgebildet sein, was einerseits die Möglichkeit gibt, besonders feine Fäden zu verarbeiten, zum anderen aber auch die Verwendung von Fäden aus unterschiedlichem Material bzw. unterschiedlichen Eigenschaften erlaubt, wobei dem gestrickebildenden Draht Zusatzwerkstoffe in Form von z B. Keramikfasern oder hochtemperaturfesten Kunststoffasern beigegeben werden können.

Es besteht jedoch auch die Möglichkeit, den gestrickebildenden Draht bzw dessen Fäden mit einer Beschichtung aus einem anderen Metall, aus einem hochtemperaturfesten Kunststoff oder Graphit zu versehen, um die Gebrauchseigenschaften hinsichtlich äußerer Einflüsse in Form von Temperatur und korrosiven Wirkungen anzupassen und um gegebenenfalls die Gleiteigenschaften des Gestrickeelementes und nicht zuletzt auch dessen Gestehungskosten trotz solcher differenzierter Gebrauchseigenschaften zu beeinflussen.

Insgesamt ergibt der Gegenstand der Erfindung also wenigstens ein im Zwischenraum zwischen Balg und Metallschlauch angeordnetes Element, das durch geringen Materialbedarf leicht ausgebildet ist und trotzdem ohne besondere Umstände eine sehr vielfache Gestaltungsmöglichkeit bietet, um die Arbeitsweise des Elementes feinfühlig und individuell an die im Einzelfall gegebenen Anforderungen anzupassen.

Was schließlich die insgesamte Gestaltung des Leitungselementes betrifft, so kann in an sich bekannter Weise vorgesehen werden, daß der Balg mit einem ihn unmittelbar umgebenden Geflechtsschlauch aus Metalldraht versehen ist, und daß Balg und Geflechtsschlauch endständig zur Bildung der Anschlußenden des Leitungselementes innerhalb eines zylindrischen Stützringes miteinander und mit diesem verpreßt und die Teile gegenseitig durch Anheften verbunden sind. Ein solcher äußerer Geflechtsschlauch dient dem äußeren Schutz des Balges und im übrigen dessen Abstützung gegen unerwünschte Längenvergrößerung.

Für die Herstellung des Metallschlauches kann vorgesehen sein, daß dieser als aus einem Metallband gegebenenfalls ohne Dichtungseinlage gewickelter Schlauch ausgebildet ist, wobei der Metallschlauch an seinen innerhalb der Balganschlußenden gelegenen Endstücken unter Zusammendrücken des Schlauchprofils und Ausgleich der Toleranzen gegenüber den Balganschlußenden radial aufgeweitet sein kann.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figuren 1 bis 4: die teilweise geschnittenen Seitenansichten eines Leitungselementes mit unterschiedlicher Anordnung des Gestrickeelementes und
- Figuren 5 bis 10: als Ausschnitt aus der Darstellung gemäß den Figuren 1 bis 4 teilweise geschnittene Seitenansichten eines Leitungselementes mit unterschiedlichen Gestaltungen des Gestrickeelementes.

Bei der nachfolgenden Beschreibung von Ausführungsformen werden gleiche Teile aus Gründen der Übersichtlichkeit mit der gleichen Bezifferung versehen.

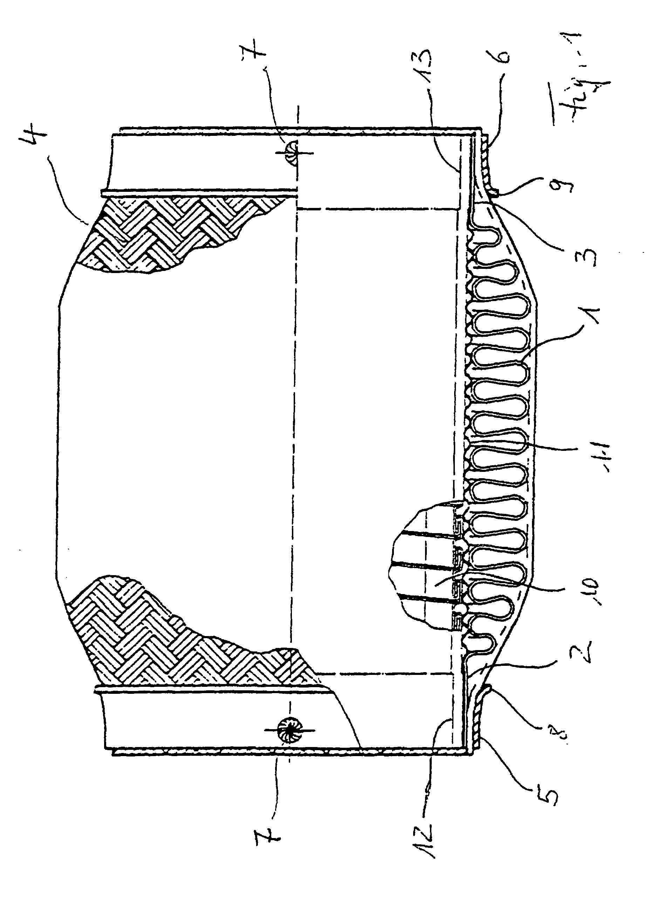

Figur 1 zeigt ein Leitungselement für die Abgasleitung eines Kraftfahrzeuges. Das Leitungselement besteht aus einem äußeren, ringgewellten Metallbalg 1 mit zylindrischen Anschlußenden 2, 3, zu denen hin die radial äußere Wellungshöhe des Metallbalges 1 endständig abnimmt. Dies dient dazu, einen den Metallbalg 1 umgebenden Geflechtsschlauch 4 allmählich auf den Querschnitt im Bereich der Anschlußenden zu fuhren, wo der Geflechtsschlauch 4 innerhalb von äußeren Stützringen 5, 6 sitzt und zusammen mit den Stützringen beispielsweise durch Punktschweißen 7 mit den Anschlußenden 2, 3 des Metallbalges 1 verbunden ist. An den aufeinander zu gerichteten Enden haben die Stützringe 5, 6 noch Aufbördelungen 8, 9, um hier Kantenpressung zwischen den Stutzringen 5, 6 und dem Geflechtsschlauch 4 zu vermeiden.

Wie ersichtlich, haben die zylindrischen Anschlußenden 2, 3 des Metallbalges 1 einen Innendurchmesser, der deutlich kleiner ist als der Innendurchmesser des gewellten Teiles des Balges 1, aus dem sich im gewellten Bereich dessen lichte Weite ergibt

Andererseits ist in den Balg 1 ein-ohne Dichtungseinlage gewickelter Metallschlauch 10 in Form eines Agraffschlauches eingesetzt, dessen Außenquerschnitt dem Innenquerschnitt der Balganschlußenden 2, 3 entspricht. Weil dies so ist, ergibt sich über den gewellten Bereich des Balges 1 ein radialer Abstand zwischen Außendurchmesser des Metallschlauches 10 und lichtem Querschnitt des Balges 1, also ein hohlzylindrischer Zwischenraum zwischen diesen beiden Teilen. In diesen ist bei der Ausführungsform gemäß Figur 1 ein Gestrickeschlauch 11 aus Metalldraht eingesetzt, der den Zwischenraum in Radialrichtung vollständig ausfüllt, so daß über den Gestrickeschlauch 11 Balg 1 und Metallschlauch 10 in Radialrichtung gegeneinander abgestützt sind. Entsprechend seiner Struktur befindet sich der Gestrickeschlauch gegenüber dem Metallschlauch 10 und den nach radial innen ragenden Wellen des Balges 1 nur in jeweils punktförmiger Anlage, so daß die gegenseitige Reibung bei Relativbewegungen zwischen Balg 1 und Metallschlauch 10 gering ist. Andererseits führt diese Reibung zu einer Dämpfung der genannten gegenseitigen Bewegung, durch die nicht nur von außen eingetragene Schwingungen abgekoppelt werden sondern durch die das Entstehen von eigenfrequenzbedingten Schwingungen sowohl des Balges 1 als auch des Metallschlauches 10 unterdrückt werden.

Gleichzeitig bildet der Geflechtsschlauch 11 eine in Radialrichtung federnde Abstützung zwischen Balg 1 und Metallschlauch 10, so daß deren gegenseitige Bewegung grundsätzlich nicht behindert ist, auch dann, wenn das Leitungselement insgesamt gebogen wird. Die federnde Abstützung sorgt aber auch dafür, daß die gegenseitige Anlage zwischen Gestrickeschlauch 11 sowie Balg 1 und Metallschlauch 10 stets aufrechterhalten bleibt insbesondere dann, wenn der Gestrikkeschlauch 11 in Radialrichtung so dimensioniert ist, daß er unter radialer Vorspannung zwischen Balg 1 und Metallschlauch 10 sitzt.

Bei der aus Figur 1 ersichtlichen Ausführungsform ist der Gestrickeschlauch 11 mit seinen Enden zwischen Metallschlauch 10 und Anschlußenden-2, 3 des Balges 1 eingefangen, dort also festgelegt. Dazu kann der Metallschlauch 10, wie aus den bei 12, 13 angedeuteten Änderungen des Innenquerschnittes des Metallschlauches 10 ersichtlich, durch Zusammendrücken des Agraffprofils radial aufgeweitet und so mit den Anschlußenden 2, 3, den Enden des Geflechtsschlauches 4 sowie den Schlitzringen 5, 6 radial verpreßt sein.

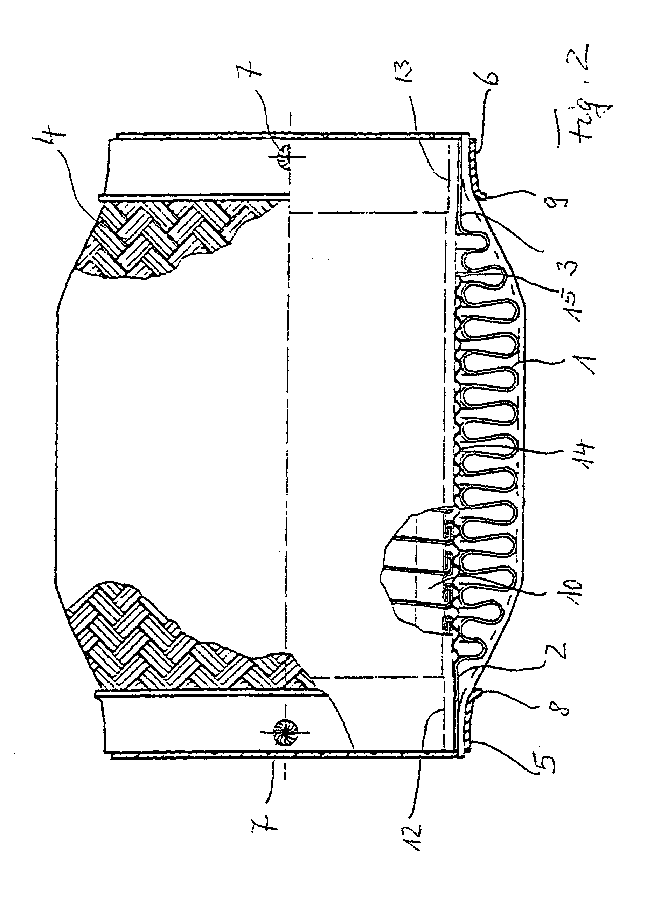

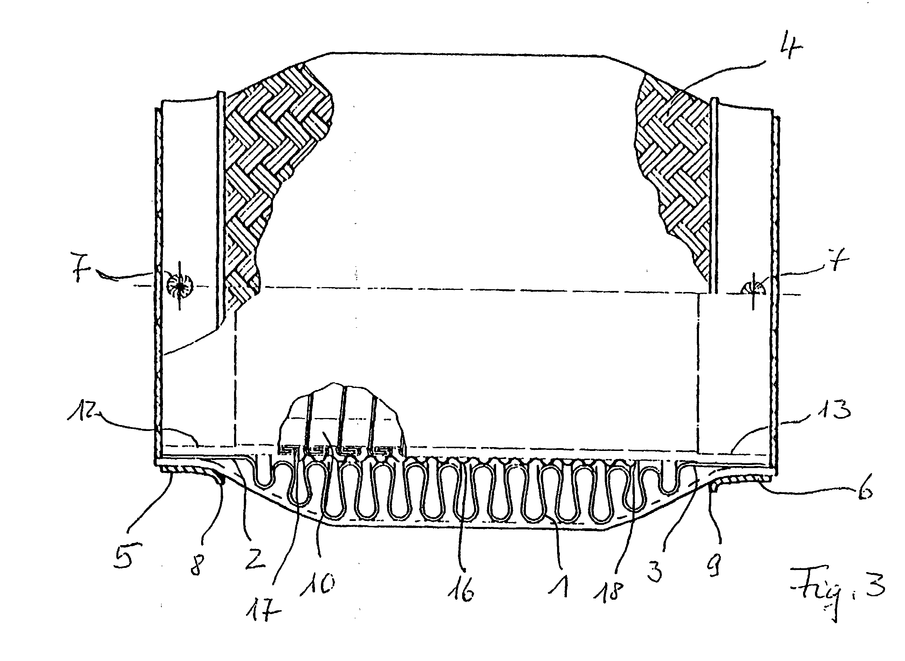

Die Ausführungsform gemäß Figur 2 stimmt weitestgehend mit der gemäß Figur 1 überein, weshalb unter Verwendung der bereits eingeführten Bezugszeichen auf die dortige Beschreibung verwiesen wird. Unterschiedlich ist, daß hier der Geflechtsschlauch 14 nur mit seinem linken Ende zwischen dem dortigen Ende des Metallschlauches 10 und dem Anschlußende 2 eingebunden ist, während sein rechtes Ende 15 vor dem dortigen Ende des Leitungselementes frei ist. Auf diese Weise ist die Abstützwirkung des Gestrickeschlauches 14 hinsichtlich Axialbewegungen von Balg 1 und Metallschlauch 10 geringer, was im Einzelfall erwünscht sein kann In diese Richtung noch weiter geht die Ausführungsform gemäß Figur 3, bei der ersichtlich der Gestrickeschlauch 16 auf beiden axialen Seiten deutlich vor den Anschlußenden des Leitungselementes aufhört, so daß seine beiden Enden 17, 18 frei sind und folglich der Gestrickeschlauch axial auf ihn einwirkenden Kräften weitgehend nachgeben kann innerhalb seiner axialen Bewegungsmöglichkeit zwischen den Enden des Leitungselementes.

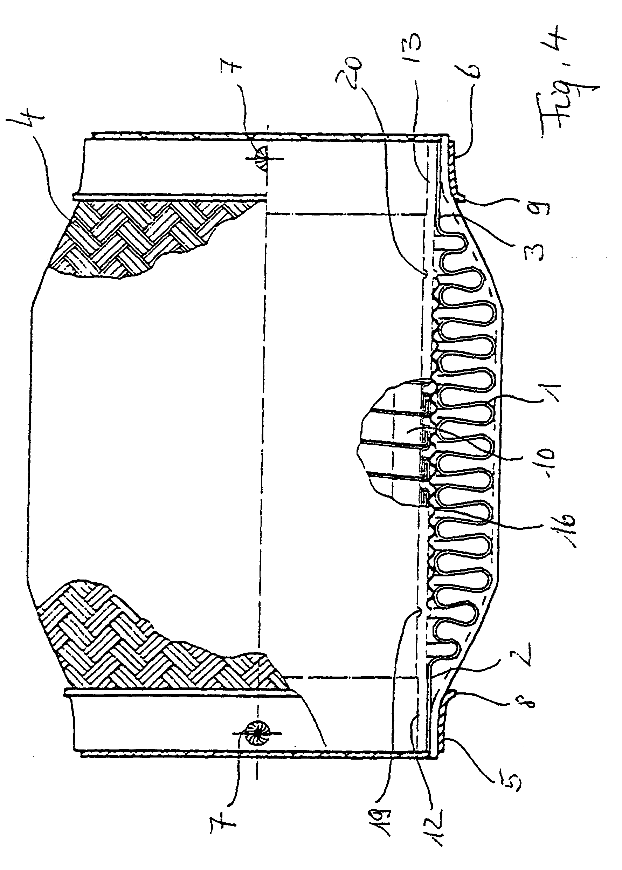

Will man wiederum einen aus bestimmten Gründen kürzeren Gestrikkeschlauch 16 der aus Figur 3 ersichtlichen Art trotzdem gegen Axialbewegung fixieren, so kann dies durch Formschluß mit einer entsprechenden Innenprofilierung des Balges 1 bzw. Außenprofilierung des Metallschlauches 10 geschehen. Figur 4 zeigt eine derartige Profilierung des Metallschlauches 10 in Form von nach radial außen gerichteten Prägungen 19, 20, die so angeordnet sind, daß der Geflechtsschlauch 16 zwischen diesen Ausprägungen 19, 20 gegenüber axialen Bewegungen eingefangen ist.

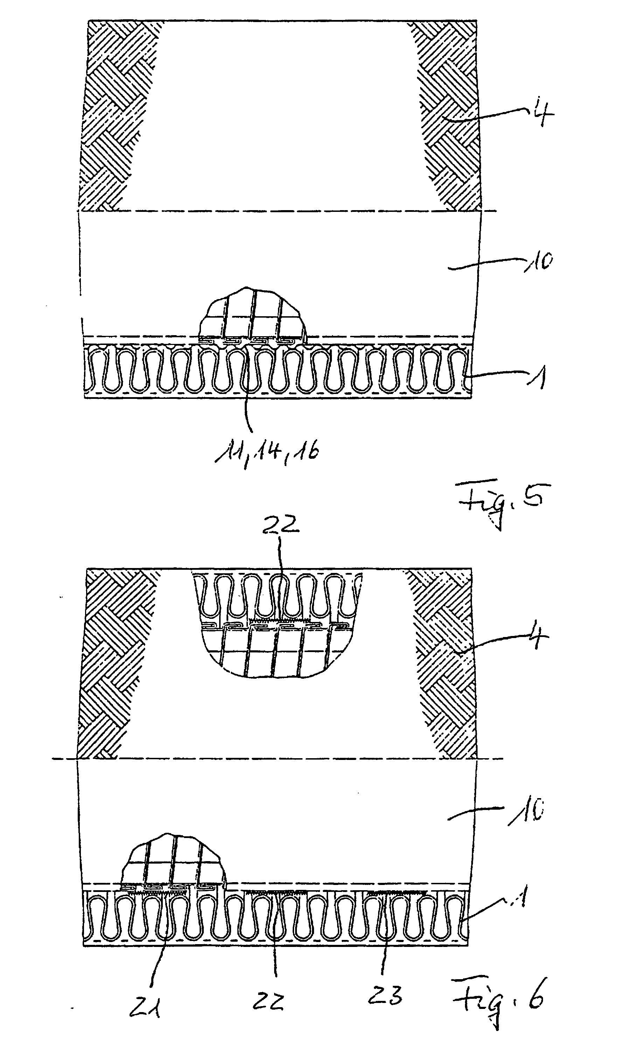

Bei den Ausführungsformen nach den Figuren 1 bis 4 ist das im Zwischenraum zwischen Balg 1 und Metallschlauch 10 angeordnete Gestrickeelement 11, 14, 16 als hohlzylindrischer Gestrickeschlauch ausgebildet. Die Figuren 5 bis 10 zeigen nun jeweils einen Axialabschnitt aus dem anhand der Figuren 1 bis 4 beschriebenen Leitungselement in teilweise aufgeschnittener Form, um weitere Ausgestaltungen des Gestrickeelementes zu veranschaulichen, wobei wiederum bei gleichen Teilen die bereits eingeführten Bezugszeichen verwendet werden.

So zeigt Figur 5 zunächst noch einmal einen Ausschnitt des anhand der Figuren 1 bis 4 beschriebenen Leitungselementes mit einem schlauchförmigen Gestrickeelement 11, 14, 16 im Zwischenraum zwischen Balg 1 und Metallschlauch 10, zu dessen Beschreibung auf die vorstehenden Ausführungen verwiesen werden kann.

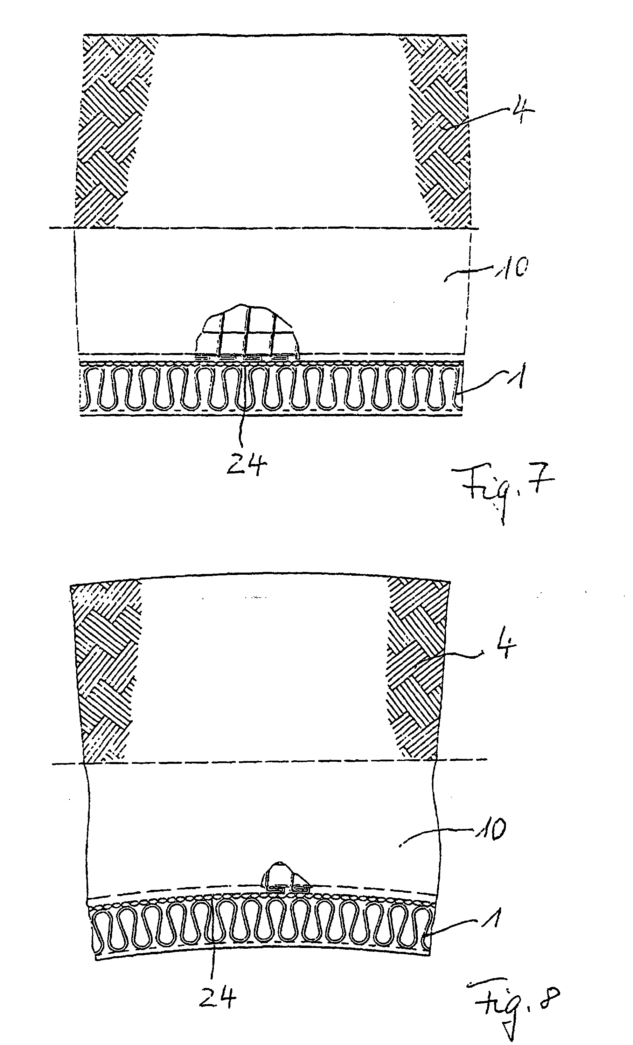

Bei der Ausfuhrungsform nach Figur 6 sind demgegenüber mit gegenseitigem axialen Abstand angeordnete Gestrickeringe 21, 22, 23 vorgesehen, aus denen sich folglich eine gegenseitige Radialabstützung und Dämpfung zwischen Balg 1 und Metallschlauch 10 nur an bestimmten Axialabschnitten ergibt. Bei der Darstellung gemäß Figur 6 sind die Gestrickeringe 21 bis 23 in Axialrichtung frei beweglich. Soll auch hier deren eventuelle Wanderbewegung verhindert werden, so kann dies durch radiale Verspannung der Ringe im Zwischenraum erfolgen, so daß sie sich mit der vorgegebenen Innenprofilierung des Balges 1 bzw. Außenprofilierung des Metallschlauches 10 in gewissem Grade verzahnen. Es kann jedoch auch wieder von der anhand der Figur 4 beschriebenen Möglichkeit Gebrauch gemacht werden, indem die Ringe 21 bis 23 beispielsweise mit Ausprägungen des Metallschlauches 10 in Eingriff sind oder zwischen diesen sitzen.

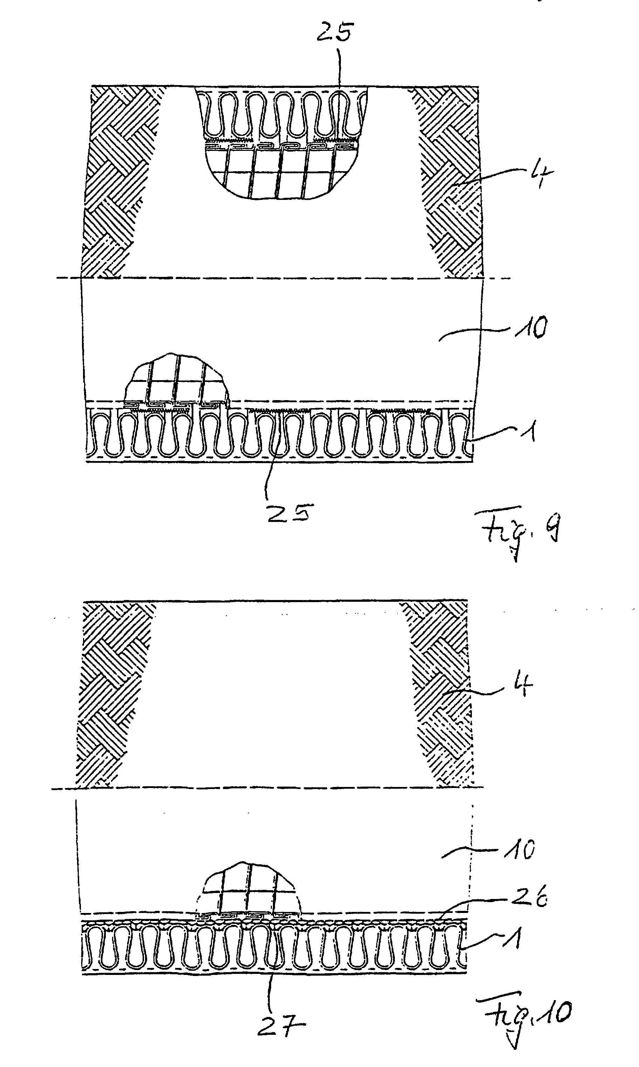

Bei der Ausführungsform gemäß Figur 7 ist ein Gestrickeschlauch 24 vorgesehen, durch dessen gegenüber dem Bisherigen abgeänderte Darstellung zum Ausdruck gebracht sein soll, daß das Gestricke mehrfädig ausgebildet sein soll. Wie bereits eingangs beschrieben, kann diese Mehrfädigkeit mehrere feine Metalldrähte beinhalten gleichermaßen wie auch Zusatzwerkstoffe in Form von Keramikfasern, Kunststoffasern oder dergleichen. Auf diese Weise lassen sich die Gebrauchseigenschaften des Gestrickes in mannigfacher Weise beeinflussen, sei es im Hinblick auf die Festigkeit bzw. Härte des Gestrickes, sei es im Hinblick auf dessen innere oder äußere Reibungseigenschaften, sei es im Hinblick auf dessen Widerstandsfähigkeit gegen Abrieb oder äußere Einflüsse durch Temperaturbelastung oder korrosive Eigenschaften des umgebenden Mediums

Figur 8 zeigt den Gegenstand gemäß Figur 7 bei gebogenem Leitungselement. Dies soll stellvertretend für alle Ausführungsformen zeigen, daß durch das Gestrickeelement derartige Bewegungen des Leitungselementes keine Behinderung erfahren. Denn bei einem Gestricke sind die miteinander verbundenen Schlaufen gegenseitig in Axialrichtung des Leitungselementes verschiebbar, ohne daß sich damit eine nennenswerte Querschnitts- bzw. Durchmesseränderung des Gestrickeelementes ergibt, so daß bei einem gebogenen Leitungselement gemaß Figur 8 das Gestricke auf der Innenseite des Bogens problemlos zusammengeschoben und auf der Außenseite des Bogens ebenso problemlos gestreckt werden kann.

Bei der Ausfuhrungsform gemäß Figur 9 ist das Gestrickeelement als ein schraubengangförmig um den Metallschlauch 10 gewickeltes Gestrickeband 25 ausgebildet. Ein solches Gestrickeband kann wiederum mit wenigstens einem seiner Enden in der anhand der Figuren 1 und 2 geschilderten Weise festgelegt werden. Es besteht jedoch auch die Möglichkeit einer Festlegung auf die anhand der Figur 4 geschilderten Weise je nach dem wie die im Einzelfall erwünscht bzw. notwendig ist.

Schließlich zeigt Figur 10 noch ein Beispiel dafür, daß ein Gestrickeschlauch 26 in Radialrichtung auch einen größeren Querschnitt aufweisen kann als es dem radialen-Abstand zwischen Balg 1 und Metallschlauch 10 entspricht. Dadurch ergibt sich beim Zusammenfügen der Teile, daß das Gestricke wie bei 27 ersichtlich in den Raum zwischen den nach innen ragenden Wellen des Balges 1 eindringt, sich also mit den Wellen des Balges 1 verzahnt und dadurch gegen Axialverschiebung gehalten ist.

Es versteht sich von selbst, daß die eingangs geschilderten, unterschiedlichen Gestaltungsformen für das Gestrickeelement sich jeweils einzeln oder zu mehreren bei einem Leitungselement verwirklichen lassen, wenn dies auch vorstehend anhand der ausgewählten Ausfuhrungsformen in seiner Vielfalt nicht dargestellt werden konnte. Besonders hingewiesen sei jedoch noch einmal auf die Möglichkeit, nach der das Gestrickeelement auch aus einem nach seiner Herstellung mehr oder weniger gestauchten bzw. verpreßten Gestricke bestehen kann. Dies mag bei den anhand der Figuren 6 und 9 erläuterten Ausführungsformen durch die dortige englinige Darstellung des Gestrikkes zum Ausdruck gebracht sein.

## Patentansprüche

1. Flexibles Leitungselement, insbesondere für Abgasleitungen von Verbrennungsmotoren bei Kraftfahrzeugen, mit einem mit zylindrischen Anschlussenden versehenen schraubengangförmig oder ringgewellten Balg (1) aus Metall und einem koaxial innerhalb des Balges angeordneten Metallschlauch (10), dessen Außenquerschnitt kleiner als der lichte Innenquerschnitt des Balges (1) ist und der mit seinen innerhalb der beiden Anschlussenden gelegenen und mit diesen bündig abschließenden Endstücken (12, 13) an den Balganschlussenden (2, 3) festgelegt ist, wobei zwischen Balg (1) und Metallschlauch (10) wenigstens ein hohlzylindrisches Element (11, 14, 16, 21-26) aus Metalldraht gestricke angeordnet ist,
**dadurch gekennzeichnet, dass** durch das Element (11, 14, 16, 21-26) der Zwischenraum zwischen Balg (1) und Metallschlauch (10) in Radialrichtung vollständig so ausgefüllt ist, dass über das Element (11, 14, 16, 21-26) Balg (1) und Metallschlauch (10) in Radialrichtung gegeneinander abgestützt sind.

2. Leitungselement nach Anspruch 1,
**dadurch gekennzeichnet,**
**dass** das Element (11, 14, 16, 21-26) radial vorgespannt bzw. unter radialer Verspannung gegenüber dem Balg (1) und/oder dem Metallschlauch (10) in den Zwischenraum eingesetzt ist.

3. Leitungselement nach Anspruch 1 oder 2,
**dadurch gekennzeichnet,**
**daß** das Element (11, 14, 16, 21-24, 26) aus wenigstens einem sich über zumindest einen Teil der axialen Länge des Zwischenraumes erstreckenden Gestrickeschlauch (11, 14, 16, 24, 26) bzw. Gestrikkering (21-23) besteht.

4. Leitungselement nach Anspruch 1 oder 2,
**dadurch gekennzeichnet,**
**daß** das Element aus wenigstens einem schraubengangförmig innerhalb des Zwischenraumes gegebenenfalls unter axialer Beabstandung benachbarter Windungen verlaufenden Gestrickeband (25) besteht.

5. Leitungselement nach einem oder mehreren der Ansprüche 1 bis 4,
**dadurch gekennzeichnet,**
**daß** das Element (11, 14, 24, 25, 26) mit wenigstens einem seiner Enden zwischen zugeordnetem Balganschlußende (2, 3) und Endstück des Metallschlauches (10) festgelegt ist.

6. Leitungselement nach einem oder mehreren der Ansprüche 1 bis 5,
**dadurch gekennzeichnet,**
**daß** das Element (26) sich mit der Innenprofilierung des Balges (1) und/oder der Außenprofilierung des Metallschlauches (10) in formschlüssigem Eingriff befindet.

7. Leitungselement nach einem oder mehreren der Ansprüche 1 bis 6,
**dadurch gekennzeichnet,**
**daß** der Balg (1) und/oder der Metallschlauch (10) auf der dem Element (16) zugewandten Seite eine zusätzliche Oberflächenprofilierung (19, 20) zum formschlüssigen Eingriff mit dem Element (16) aufweist.

8. Leitungselement nach einem oder mehreren der Ansprüche 1 bis 7,
**dadurch gekennzeichnet,**
**daß** das das Element (21-23, 25) bildende Gestricke zumindest teilweise verdichtet bzw gestaucht oder zusammengepreßt ist.

9. Leitungselement nach einem oder mehreren der Ansprüche 1 bis 8,
**dadurch gekennzeichnet,**
**daß** das Element (11, 14, 16, 21-26) und/oder das das Element bildende Gestricke eine Querschnittsprofilierung aufweist.

10. Leitungselement nach einem oder mehreren der Ansprüche 1 bis 9,
**dadurch gekennzeichnet,**
**daß** der gestrickebildende Metalldraht mehrfädig ausgebildet ist.

11. Leitungselement nach Anspruch 10,
**dadurch gekennzeichnet,**
**daß** die Fäden aus unterschiedlichem Material bestehen bzw. unterschiedliche Eigenschaften aufweisen.

12. Leitungselement nach einem oder mehreren der Ansprüche 1 bis 11,
**dadurch gekennzeichnet,**
**daß** dem gestrickebildenden Draht Zusatzwerkstoffe in Form von zum Beispiel Keramikfasern oder hochtemperaturfesten Kunststoffasern beigegeben sind.

13. Leitungselement nach einem oder mehreren der Ansprüche 1 bis 12,
**dadurch gekennzeichnet,**
**daß** der gestrickebildende Draht bzw. dessen Fäden mit einer Beschichtung aus einem anderen Metall, aus einem hochtemperaturfesten Kunststoff oder Graphit versehen ist

14. Leitungselement nach einem oder mehreren der Ansprüche 1 bis 13,
**dadurch gekennzeichnet,**
**daß** der Balg (1) mit einem ihn unmittelbar umgebenden Geflechtsschlauch (4) aus Metalldraht versehen ist, und daß Balg (1) und Geflechtsschlauch (4) endständig zur Bildung der Anschlußenden des Leitungselementes innerhalb eines zylindrischen Stützringes (5, 6) miteinander und mit diesem verpreßt und die Teile gegenseitig durch Anheften (7) verbunden sind.

15. Leitungselement nach einem oder mehreren der Ansprüche 1 bis 14,
**dadurch gekennzeichnet,**
**daß** der Metallschlauch (10) als aus einem Metallband gegebenenfalls ohne Dichtungseinlage gewickelter Schlauch ausgebildet ist.

16. Leitungselement-nach einem oder mehreren der Ansprüche 1 bis 15,
**dadurch gekennzeichnet,**
**daß** der Metallschlauch (10) an seinen innerhalb der Balganschlußenden (2, 3) gelegenen Endstücken und Zusammendrücken des Schlauchprofils und Ausgleich der Toleranzen gegenüber den Balganschlußenden (2, 3) radial aufgeweitet ist.

## Claims

1. Flexible duct element, especially for exhaust gas ducts of internal combustion engines in motor vehicles, having a helically or annularly corrugated metal bellows (1) provided with cylindrical connection ends and having arranged coaxially inside the bellows a flexible metal tube (10), the outer diameter of which is smaller than the internal cross-section of the bellows (1) and which is fixed by its end pieces (12, 13) to the connection ends (2, 3) of the bellows, which end pieces (12, 13) are arranged inside the two connection ends and terminate flush therewith, there being arranged between bellows (1) and flexible metal tube (10) at least one hollow cylindrical element (11, 14, 16, 21-26) of knitted metal wire fabric,
**characterised in that**
the intermediate space between bellows (1) and flexible metal tube (10) is completely filled in the radial direction by the element (11, 14, 16, 21-26) so that by way of the element (11, 14, 16, 21-26) the bellows (1) and the flexible metal tube (10) are supported one against the other in the radial direction.

2. Duct element according to claim 1,
**characterised in that**
the element (11, 14, 16, 21-26) is radially biased or is inserted in the intermediate space under radial bias with respect to the bellows (1) and/or the flexible metal tube (10).

3. Duct element according to claim 1 or 2,
**characterised in that**
the element (11, 14, 16, 21-24, 26) consists of at least one knitted fabric tube (11, 14, 16, 24, 26) or knitted fabric ring (21-23) extending over at least a portion of the axial length of the intermediate space.

4. Duct element according to claim 1 or 2,
**characterised in that**
the element consists of at least one knitted fabric strip (25) extending helically within the intermediate space, with adjacent windings optionally being spaced apart axially.

5. Duct element according to one or more of claims 1 to 4,
**characterised in that**
the element (11, 14, 24, 25, 26) is fixed by at least one of its ends between the associated bellows connection end (2, 3) and end piece of the flexible metal tube (10).

6. Duct element according to one or more of claims 1 to 5,
**characterised in that**
the element (26) is in interlocking engagement with the internal protuberances of the bellows (1) and/or the external protuberances of the flexible metal tube (10).

7. Duct element according to one or more of claims 1 to 6,
**characterised in that**
the bellows (1) and/or the flexible metal tube (10) has on its side facing the element (16) additional surface protuberances (19, 20) for interlocking engagement with the element (16).

8. Duct element according to one or more of claims 1 to 7,
**characterised in that**
the knitted fabric forming the element (21-23, 25) is at least partly compressed/compacted or squeezed together.

9. Duct element according to one or more of claims 1 to 8,
**characterised in that**
the element (11, 14, 16, 21-26) and/or the knitted fabric forming the element have or has cross-sectional protuberances.

10. Duct element according to one or more of claims 1 to 9,
**characterised in that**
the metal wire forming the knitted fabric is of multi-filament structure.

11. Duct element according to claim 10,
**characterised in that**
the filaments consist of different materials or have different properties.

12. Duct element according to one or more of claims 1 to 11,
**characterised in that**
additional materials in the form of, for example, ceramics fibres or high-temperature-resistant plastics fibres are added to the wire forming the knitted fabric.

13. Duct element according to one or more of claims 1 to 12,
**characterised in that**
the wire forming the knitted fabric or the filaments thereof is provided with a coating of a different metal, of a high-temperature-resistant plastics or graphite.

14. Duct element according to one or more of claims 1 to 13,
**characterised in that**
the bellows (1) is provided with a woven flexible tube (4) of metal wire, which tube (4) immediately surrounds the bellows (1); and in order to form the connection ends of the duct element the bellows (1) and the woven flexible tube (4) are at their ends, inside a cylindrical supporting ring (5, 6), held compressed together with one another and with the ring, and the parts are joined to one another by stapling (7).

15. Duct element according to one or more of claims 1 to 14,
**characterised in that**
the flexible metal tube (10) is in the form of a flexible tube wound from a metal strip, optionally without a sealing insert.

16. Duct element according to one or more of claims 1 to 15,
**characterised in that**
the flexible metal tube (10) is expanded radially at its end pieces arranged inside the connection ends (2, 3) of the bellows, the tube profile being compressed and the tolerances with respect to the connection ends (2, 3) of the bellows being taken up.

## Revendications

1. Élément de conduite flexible, notamment pour conduites d'échappement de moteurs à combustion interne de véhicules automobiles, comprenant un soufflet (1) en métal de forme hélicoïdale ou ondulée muni d'extrémités de raccordement cylindriques et un tuyau métallique (10) disposé de façon coaxiale dans le soufflet, dont la section transversale extérieure est inférieure à la section transversale intérieure du soufflet (1) et qui est fixé par ses segments d'extrémité (12, 13) situés à l'intérieur des deux extrémités de raccordement et se terminant en affleurement avec celles-ci aux extrémités de raccordement (2, 3) du soufflet, sachant qu'entre le soufflet (1) et le tuyau métallique (10) est placé au moins un élément cylindrique creux (11, 14, 16, 21-26) en tissu à mailles métalliques, **caractérisé en ce que** par l'élément (11, 14, 16, 21-26) l'espace entre le soufflet (1) et le tuyau métallique (10) dans la direction radiale est entièrement comblé, de telle sorte que le soufflet (1) et le tuyau métallique (10) sont appuyés l'un contre l'autre dans la direction radiale par l'intermédiaire de l'élément (11, 14, 16, 21-26).

2. Élément de conduite selon la revendication 1, **caractérisé en ce que** l'élément (11, 14, 16, 21-26) est précontraint radialement ou est inséré dans l'intervalle en étant précontraint radialement par rapport au soufflet (1) et/ou au tuyau métallique (10).

3. Élément de conduite la revendication 1 ou 2, **caractérisé en ce que** l'élément (11, 14, 16, 21-24, 26) est constitué d'au moins un tuyau en tissu à mailles (11, 14, 16, 24, 26) ou un anneau en tissu à mailles (21-23) s'étendant au moins sur une partie de la longueur axiale de l'intervalle.

4. Élément de conduite la revendication 1 ou 2, **caractérisé en ce que** l'élément est composé d'au moins une bande de tissu à mailles (25) s'étendant en forme d'hélice à l'intérieur de l'intervalle, le cas échéant avec un espacement axial de spires adjacentes.

5. Élément de conduite selon l'une ou plusieurs des revendications 1 à 4, **caractérisé en ce que** l'élément (11, 14, 24, 25, 26) est immobilisé par au moins l'une de ses extrémités entre l'extrémité de raccordement du soufflet (2, 3) et la partie d'extrémité du tuyau métallique (10) qui lui sont associées.

6. Élément de conduite selon l'une ou plusieurs des revendications 1 à 5, **caractérisé en ce que** l'élément (26) est en prise par engagement positif avec le profilage intérieur du soufflet (1) et/ou le profilage extérieur du tuyau métallique (10).

7. Élément de conduite selon l'une ou plusieurs des revendications 1 à 6, **caractérisé en ce que** le soufflet (1) et/ou le tuyau métallique (10) présente sur le côté tourné vers l'élément (16) un profilage superficiel supplémentaire (19, 20) lui permettant de se mettre en prise par engagement positif avec l'élément (16).

8. Élément de conduite selon l'une ou plusieurs des revendications 1 à 7, **caractérisé en ce que** le tissu à mailles formant l'élément (21-23, 25) est au moins partiellement comprimé ou écrasé.

9. Élément de conduite selon l'une ou plusieurs des revendications 1 à 8, **caractérisé en ce que** l'élément (11, 14, 16, 21-26) et/ou le tissu à mailles formant l'élément présente une section transversale profilée.

10. Élément de conduite selon l'une ou plusieurs des revendications 1 à 9, **caractérisé en ce que** le fil métallique formant le tissu à mailles est réalisé avec plusieurs brins.

11. Élément de conduite selon la revendication 10, **caractérisé en ce que** les fils sont composés de différents matériaux ou présentent différentes propriétés.

12. Élément de conduite selon l'une ou plusieurs des revendications 1 à 11, **caractérisé en ce que** des matériaux d'addition sous forme, par exemple, de fibres céramiques ou de fibres de matière plastique résistant à des températures élevées sont associées au fil métallique formant le tissu à mailles.

13. Élément de conduite selon l'une ou plusieurs des revendications 1 à 12, **caractérisé en ce que** le fil métallique constituant le tissu à mailles ou ses brins est entouré d'un revêtement d'un autre métal, d'une matière plastique résistant aux fortes températures ou de graphite.

14. Élément de conduite selon l'une ou plusieurs des revendications 1 à 13, **caractérisé en ce que** le soufflet (1) est directement entouré par un tuyau en fil métallique tressé (4), et **en ce que**, pour former les extrémités de raccordement de l'élément de conduite, le soufflet (1) et le tuyau tressé (4) sont assemblés à leurs extrémités par compression à l'aide d'une bague d'appui cylindrique (5, 6) et **en ce que** les éléments sont reliés entre eux par des attaches (7).

15. Élément de conduite selon l'une ou plusieurs des revendications 1 à 14, **caractérisé en ce que** le tuyau métallique (10) est réalisé en tant que tuyau enroulé à partir d'une bande de métal, le cas échéant sans garniture d'étanchéité.

16. Élément de conduite selon l'une ou plusieurs des revendications 1 à 15, **caractérisé en ce que** le tuyau métallique (10) est élargi radialement au niveau de ses segments d'extrémité situés à l'intérieur des extrémités de raccordement (2, 3) du soufflet par compression du profilé du tuyau et compensation des tolérances par rapport aux extrémités de raccordement (2, 3) du soufflet.
